(19) Europäisches Patentamt
European Patent Office
Office européen des brevets

(11) EP 1 569 373 A1

(12) EUROPEAN PATENT APPLICATION

(43) Date of publication:
31.08.2005 Bulletin 2005/35

(51) Int Cl.[7]: **H04L 1/00**, H04J 3/16, H04Q 7/38

(21) Application number: **05003646.6**

(22) Date of filing: **21.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.02.2004 IT MI20040338**

(71) Applicant: **Forem S.r.l.**
**20041 Agrate Brianza (IT)**

(72) Inventors:
- **Baccetti, Baccio**
  **20121 Milano (IT)**
- **Vannucchi, Alessandro**
  **20040 Velate (MI) (IT)**

(74) Representative: **Incollingo, Italo**
**Piazzale Lavater, 3**
**20129 Milano (IT)**

(54) **Flexible multiplexing/demultiplexing system for point to point adaptively modulated radio transmissions**

(57) A system to radio-transmit N signals to be bundled together at the transmitter and to be unbundled at the receiver in channel multiplexers-demultiplexers having flexible and programmable structure for point-to-point radio transmission involving: - adaptive modulation; - traffic prioritization; - variation of the transmission physical mode only in function of the propagation conditions; and - differentiated service quality levels.

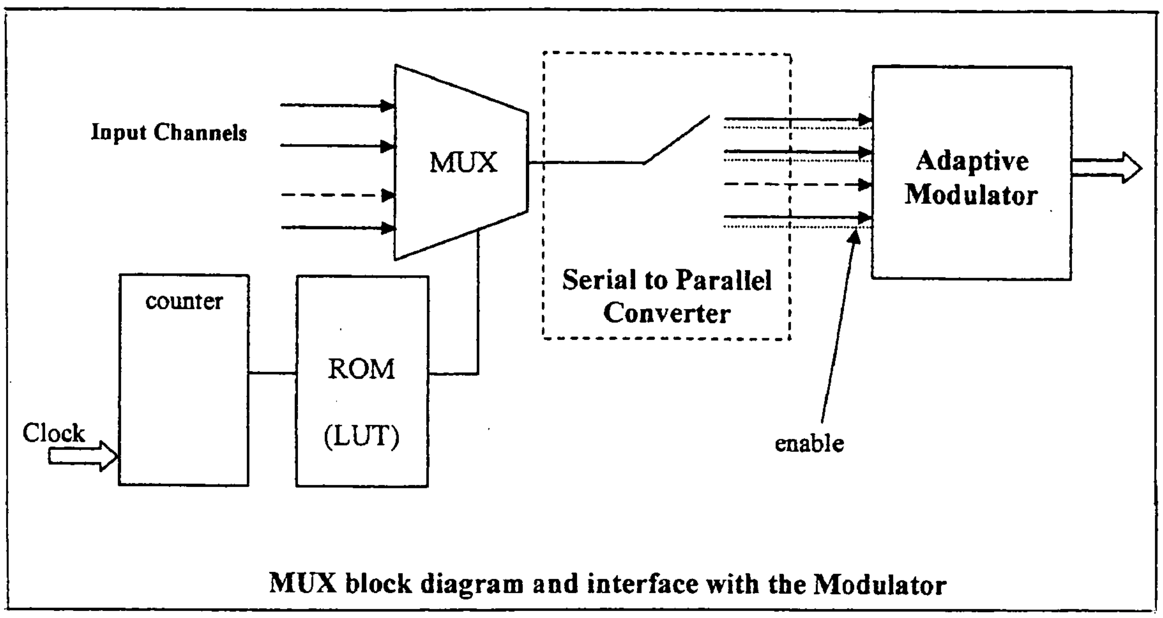


Fig. 3

EP 1 569 373 A1

## Description

## BACKGROUND OF THE INVENTION

### Abstract of the disclosure

The present invention deals with flexible, programmable multiplexing/demultiplexing systems for multiple signal transmissions over point-to-point radio systems, especially in combination with adaptive modulation schemes.

These systems may have options such as traffic prioritization, throughput flexibility, and combinations of service. The invention allows the user of these options to have the maximum flexibility and to manage the multiplexing/demultiplexing formats to best fit his needs.

### Field of the invention

The invention relates to a multiplexing/demultiplexing system of signals carrying various services, in order to bundle them in the most convenient way for point-to-point radio transmission using adaptive modulation, where the RF occupied bandwidth can have different values (such as 3.5, 7, 14, and 28 MHz) but only in a pre-assigned mode. In other words, once the desired bandwidth has been selected it will remain fixed. For "adaptive modulation" it is intended, for varying propagation conditions, to dynamically and automatically vary the transmission modes of the radio. These transmission modes are called PHY modes and they can vary, for a given occupied bandwidth, between two (or more) available states to mitigate the effects of propagation.

The PHY mode is generally defined by the modulation scheme adopted and the associated FEC (Forward Error Correction). For a given occupied bandwidth, once the PHY Mode is defined, a certain net transmission capacity (called "payload" or net throughput) is obtained. The relation between occupied bandwidth and throughput is expressed by the following equation:

$$T\ (\text{Mbps}) = \eta\ BW$$

where *BW* is the channel bandwidth (in MHz) and $\eta$ is the net spectral efficiency (in bit/Hz). Modulation formats with higher spectral efficiency have greater complexity.

The Signal To Noise Ratio performance ($\alpha$), which gives the bit error probability (BER), varies with the complexity of the PHY Mode. Two parameters ($\eta$, $\alpha$) are associated to each PHY Mode; to obtain a higher $\eta$ it is necessary to have greater values of $\alpha$.

If the link propagation conditions worsen, the fading of the link increases, so it is desirable to switch to a less complex PHY Mode (with a lower $\alpha$), so as to mitigate the effect of the worsening propagation conditions.

For a fixed bandwidth *BW,* the reduction of $\alpha$ involves a reduction of $\eta$ and a reduction of the throughput *T*. In other words, for a fixed bandwidth, adaptive modulation necessarily involves variation in the instantaneous throughput supported by the system.

Adaptive modulation can be adopted for transmitting signals or combinations of signals that can hold different transmission rates, i.e. for combinations of signals which contain both cell-oriented (e.g. ATM) and/or packet oriented (e.g. IP) information. In this context, the specific multiplexing/demultiplexing technique is critical and must satisfy the following characteristics:

- Throughput flexibility: it must be easily configured (e.g. via software for the different assigned bandwidths, for instance from 3.5 to 28 MHz)
- Traffic prioritization: it must be possible to assign (via a user interface) different priorities to the different signals to be multiplexed, in order to associate them to the different PHY modes available in the adaptive modulation scheme. It must be possible to assign the signals with highest priority to the PHY mode of lowest complexity, i.e. the most robust. This will allow the maximum availability in time for these signals. Signals with decreasing priority should be assigned to increasingly-complex PHY modes.
- Services flexibility: it must be possible to accept different services with different characteristics and rates; for instance, E1 signals together with ATM signals and IP data.

### Prior Art

In the EPO's standard Search Report N° 111122 IT following prior documents are cited:

1) EP 0975190 (X) "Multi-transport mode bus frame format" comprising: - time slots for control communication between devices; - data time slots for a multi-transport mode data portion; - and transport mode signals.
2) Article in IEEE Vol. 2 (2000-10-22) - (X) by J. Park et al "Efficient Resource Allocation for QoS Channels MF-TDMA Satellite Systems" involving two phases of resource calculation and resource allocation.
3) DE 19705534 (X) "Transmission of digital signal in a user radio network" with two quality classes, i.e. high quality real time signals and low quality non real time signals.
4) US Pat. 6.262.994 (A), 5) EP 0942550 (A),(6) WO 03/034639 (A).

The use of adaptive modulation in radio links is so far limited to and/or suggested for PMP (point-to-multipoint) systems where a plurality of peripheral Terminal Stations ("TS"), distributed over a certain geographical area, or cell, is connected to a Master Station ("MS"). The traffic is generally mixed, but usually data are preponderant.

In the most popular technology (time division multiple access, or TDMA), the Terminal Stations transmit in different and non-overlapping time slots in order to maintain the signals' mutual orthogonality. The information to be transmitted from each TS to the Master Station (the "up-link" direction) is segmented into elementary blocks mapped (through the modulation) over packets ("bursts") of signals transmitted in separate time slots, suitably managed so as not to overlap at the MS receiver, thus avoiding mutual interference.

These systems are characterized by capacity allocation on demand, which means a variable number of "bursts" is sent from each TS in the given time unit (i.e., time-variable throughput).

In these conditions it becomes natural to use different PHY modes for each "burst" in order to optimize the overall throughput over the cell, and to better adapt to the very different conditions that the Terminal Stations have to deal with in their connections to the MS. The conditions might vary because of:

- Different TS-to-MS distances
- Different propagation conditions within the cell
- Different, and time-varying, throughput to and from each TS

Within this context the use of the adaptive modulation is a powerful method for optimizing the total throughput over the cell and for optimal sharing of common resources (i.e. the RF bandwidth and the MS hardware) among different users, with an important fallback on the overall competitiveness of the system.

In PTP (point-to-point) systems that don't use the adaptive modulation, fixed signal (e. g. E1/T1) combinations are multiplexed according to the modulation selected and the RF bandwidth available.

If IP data traffic is also present, radio link equipment usually allows only certain predefined combinations of E1 channels and data channels, and the quality (in terms of annual availability) is the same for all the services.

In case of PTP adaptive modulation, where for a fixed occupied RF bandwidth the transmitted bit rate can vary, it is possible to differentiate and best adapt the level of quality given to the different services, while at the same time optimizing the use of radio resources. For instance, the PHY mode of the radio may be varied to maintain good link availability.

However, this is made possible only by "smart" multiplexing/demultiplexing of the different services. The technique must differentiate by quality of service or priority, and assign signals appropriately to the different available PHY modes.

This invention is related to a flexible multiplexing/demultiplexing system of mixed services, which generally have different quality objectives (in particular, quality of service in terms of availability) in combination with point-to-point adaptive modulation schemes.

The basic idea is to assign different priorities (qualities) to the different services to be multiplexed. The multiplexing structure will then guarantee the assignment of the different services to the different PHY modes in reverse order with respect to priorities of the services. The services with a lower priority will be assigned to PHY modes of increasing complexity, in order to guarantee the maximum survival (or availability over time) of the services with greater priority requirements. Fundamental data needed for a correct operation of the radio link (e.g., telemetry channels, remote service channels, etc.) are also treated as requiring higher priority.

## SUMMARY OF THE INVENTION

The aim of the invention is to provide a programmable and flexible multiplexing/demultiplexing system having the following characteristics:

— It will be associated with a point-to-point adaptive modulation scheme: the adaptation of the PHY modes will be driven exclusively by the link propagation conditions. The change of the PHY mode will keep the occupied RF bandwidth the same.

- Throughput flexibility: it will configure (via a user interface, the "FRAME WIZARD") selectable assigned bandwidths (e.g., 3.5 to 28 MHz).
- Traffic prioritization: it will assign (via the FRAME WIZARD) different priorities (or qualities of service) to the different signal to be multiplexed, in order to associate them to the different PHY modes available in the adaptive modulation scheme, with the following rules:

    1. The services with higher priority (priority 1) will be assigned to the PHY Mode of lower complexity (the one with a lower SNR threshold level ($\alpha_1$), that will better survive to the propagation losses, so as to guarantee for these services the minimum unavailability over time);
    2. the services with priority 1 and 2 will be assigned to the next more-complex PHY mode, with the next SNR threshold level $\alpha_2 > \alpha_1$;
    3. and so on, systematically.

- Flexibility in the combination of services: it will be configurable to accept "mixed" services, for instance, PDH signals in NxE1 format, ATM signals in NxE1-IMA format, and IP signals in Ethernet format, and in different proportions.

Benefits deriving from the invention:

Conventional systems: the dimensioning of a traditional radio system (for a fixed PHY Mode) is usually done to guarantee a quality objective on the link. The term "quality" is herein intended to relate to a service or a signal transported by the radio link, and includes both long term availability and short term signal integrity.

In a radio system, for a fixed minimum error rate to be guaranteed, the following definitions apply:

- *Availability*: The percentage of time in a year for which the error rate is lower than a fixed target ($BER<BER_o$, where $BER_o$ is typically $10^{-6}$). For instance, a typical objective for availability is 99.99%, corresponding to a total "unavailability" of 52 minutes per year.
- *Integrity:* Short term signal quality.

The propagation phenomenon that has impact on availability for high frequencies (over 13GHz) and on short-hauls links (under 10-15 km) is typically heavy rain. The rain introduces a supplementary attenuation (fading) on the link that is not selective within the frequency band ("flat fading").

In this case, the increase in error rate may be avoided by increasing the SNR at the receiver (for higher frequencies), which means for a fixed modulation scheme, increasing the output power of the transmitter.

The propagation phenomenon that has impact on integrity for the lower RF frequencies (under 13GHz) and on long-hauls links (over 25-30 km) is usually multipath. Multipath propagation introduces a supplementary attenuation that is selective within the frequency band ("selective fading").

In this second case, the increase in error rate may be avoided by increasing the transmitted power and compensating for the intersymbol interference with an adaptive equalizer.

**Systems with the proposed invention:** In the point-to-point radio systems, following the proposed invention, it is possible, at the onset of worsening propagation conditions, to switch to a PHY Mode with a higher system gain (i.e. to a modulation scheme of lower complexity), while preserving the quality of the services with highest priority.

This is done using the proposed multiplexing/demultiplexing technique, which allows the throughput decrease to be concentrated on the lower-priority signals.

In order to have the maximum flexibility, the priority is decided by the user.

This system gives benefits also at lower frequencies where multipath is present, because a lower modulation scheme is more tolerant to intersymbol interference (which corresponds to a better receiver signature). So, generally speaking, this system is effective both at high RF frequencies (rain attenuation) and at low RF frequencies (multipath).

**Benefits of the invention:** The benefits arising from the invention are the possibility of combining on the same radio system the following characteristics:

1. High system gain near the threshold, and momentary throughput reduction only for services with low priority (i.e. for a very low percentage of time).
2. High spectral efficiency in normal conditions (i.e., for a high percentage of time).

From a competitive point of view, this combination allows significant advantages to be achieved:

1. Reduction of the transmitted power that would be needed for the same link length. This means a reduction of the component cost in the transmitter, as well as reduction in power consumption, fewer thermal dissipation problems, and increased MTBF of the product.
2. Reduction of the antenna diameter for the same link length, with a decreased visual impact, which is very important in urban applications.

**Example of a practical case illustrating the advantages of the invention:**

Table 1 lists the typical parameters of a 38GHz radio system in an urban environment. The defined PHY modes are 4QAM and 16QAM. For both a Reed-Solomon encoder (128,120) is used. The correction capacity is 4 errors per block. The values of $\alpha$ include implementation losses. The climatic zone considered is quite severe (ITU zone K, with a maximum rain intensity of 42 mm/hh). A parabolic antenna with a 25 cm diameter is assumed. The switch between the two PHY Modes is assumed to occur at a constant peak power. The transmitted power is quite low: 8.5 dBm for 4QAM and 6 dBm for 16QAM, which are compatible with a final amplifier with a 1-dB power rating (P1dB) of 17 dBm. The system gain difference between the two PHY modes is 10dB.

Table 1 :

| **Typical Parameters of a 38GHz radio link in an urban environment, utilizing adaptive modulation.** | | | | | |
|---|---|---|---|---|---|
| Rain intensity (mm/h) | 42,00 | PHY Mode | **16QAM** | | **4QAM** |
| RF (GHz) | 38,00 | Codec RS(128,120) | on | | on |
| BW (MHz) | 7,00 | $\alpha$ = S/N @ 10exp(-6) (dB) | 19,00 | | 11,50 |
| Roll-off Factor p | 0,50 | Net throughput T (Mbps) | 17,50 | | 8,75 |
| Symbol Freq (MHz) | 4,67 | PTX (dBm) | 6,00 | | 8,50 |
| Φant (m) | 0,25 | RX threshold THRX (dBm) | -77,31 | | -84,81 |
| Noise Fig (dB) | 11,00 | Δ System Gain (dB) | | 10,00 | |

For the 4QAM mode, the net throughput is 8.75Mbps, in which 100% of the high priority services are concentrated. The throughput is doubled in 16QAM mode.
One choice could be to transmit 4 E1 channels together with the telemetry channels and the service channels over the high priority 8.75Mbsps (e.g., with a "carrier class" availability of 99.99%), and a 10BaseT signal over the remaining 8.75Mbps, with an availability of 99.97%, which is more than sufficient for IP traffic.
In fig. 1, an example of unavailability (which equals 100% minus the availability in percent) versus the hop length is shown. The availability objective of 99.99% for the high priority services is given for a hop length of 3.9 Km, more than sufficient for a urban application.
The total time for which the system works in 4QAM, i.e. with a throughput reduction, is only 95 minutes, and during that time services with highest priority are guaranteed to retain their quality of service.
A traditional system with a fixed modulation scheme and the same performance would require a transmit amplifier with a 10dB higher output power (27dBm) and ten times the power consumption.

**Implementation of the invention**

In fig. 3 a typical implementation is shown. Other similar implementations are possible that provide the characteristics and functionalities herein explained.

**Introduction**

An essential characteristic of the multiplexing/demultiplexing method explained here is to let the user define a priority for each of the various services to be transmitted, in order to assign them to the different modulation schemes.
First, an interface with the modulator must be defined.
If M is the number of modulation levels, it is natural to interface to the modulator with $n=\log_2 M$ lines. In general in an adaptive modulation scheme not all these lines will be active; the number of active lines depends upon the modulation format (i.e. the PHY mode). In fig. 2 a typical implementation is shown: data coming from a multiplexer ("MUX") feeds a serial-to-parallel converter, whose output interfaces to the adaptive modulator over n lines.
The following definitions for the priority ("PRTY") apply:

- For a given modulation scheme, where M is the number of modulation states that can be variable or fixed, the maximum number N of levels of priority equals the number of different values of $M$ (in an adaptive modulation scheme, this number is variable).
In a scheme where the number of modulation states is fixed, the number of PRTY levels is of course 1. For instance, for a 4/16QAM adaptive modulation scheme $N$ equals two.

— The values $q_k$ of each PRTY are:

$$q_k=(log_2M_k)\ ,\ 1 \leq k \leq N$$

The greater is the PRTY, the lower is the value of $q_k$.

**Description of the system**

The system is characterized by a fixed hardware structure together with a software look-up table ("LUT"). The LUT is generated by a user-interface program called "FRAME WIZARD" that allows the operator to set certain parameters and to assign the priorities. The FRAME WIZARD automatically generates the LUT satisfying both operator requests (whenever possible) and hardware compatibility.

**Frame structure and partition.**

The frame structure must first be defined. The frame structure is basically independent of the multiplexing hardware. This independence is obtained also by defining "virtual channels" in which the content can vary and/or can be defined by the user.

- For a given modulation scheme, we define the superframe as the frame corresponding to $M=M_{max}$. E.g., in the case of the 4/16/64QAM adaptive modulation scheme, the superframe corresponds to 64QAM.
- The superframe is unique once the RF bandwidth has been assigned
- Each superframe contains a number N of sub-frames with PRTY $q_k$ $(1 \leq k \leq N)$
- If $q_k = q_{min}$ then $q_{k-1}=0$.
- The minimal subframe is the one corresponding to $q_{min}$, i.e. the one corresponding to the most robust PHY mode. E.g., in a 16/64QAM adaptive modulation scheme, the minimal subframe is the one corresponding to 16QAM.
- The data with higher PRTY (lower q) will be allocated in the minimum subframe. The frame rate is the same for all the subframes and consequently for the superframe.
- The PRTY value of $q_{min}$ is assigned to data without which the radio system cannot work properly. This data contains, for instance, stuffing bits, telemetry channels, frame alignment word, the link identifier ID, and so on.
- The modulator is interfaced, for a given RF occupied BW, at the same rate over $n=log_2M$ lines. Each line has an "enable" signal that tells the modulator if that line is to be transmitted. The number of active lines determines the modulation order.
- To each of these lines a subframe is assigned. The minimum subframe will occupy the first $q_{min}$ lines. The remaining lines will be occupied by subframes with increasing q.
- The superframe structure is obtained interlacing (bit to bit or byte to byte) the sub-frames: each subframe with PRTY $q_k$ occupies, with periodicity $q_{max}$, a slot $J$ (bit or byte) such that $(1+q_{k-1}) \leq J \leq q_k$.

**Virtual channels**

We define as "virtual channels" those channels at the multiplexer input that have information content not directly accessible from the user. Within the virtual channels are the stuffing bits, the FEC syndrome, the alignment word, the service channels, the "empty" channel (a channel for filling "holes" in the frame with a random sequence), etc.
At the multiplexer input, all real as well as virtual channels are present. The LUT will select the channels to be stuffed into the frame. The channels are numbered; the correspondence between the channel number and the channel itself is known from the program that will generate the LUT.

Multiplexer structure

The hardware structure of the multiplexer is completely defined above. The LUT programs the multiplexer to match the particular needs of the user and for correct functioning of the radio system.
The program that generates the LUT is responsible for advising the user in case a desired configuration cannot be implemented.

The multiplexer structure is as follows. The MUX has all the possible channels at its input. A counter cyclically scans the LUT (i.e. the whole superframe), and the output of the LUT selects the wanted channel at that particular time. The counter dimensions are determined from the LUT length. Since for each RF BW the LUTs are of different lengths, the counter must be initialized with the proper LUT length. The output of the MUX goes into a serial to parallel converter. The data is split into n lines that feed the modulator which (depending on the modulation scheme adopted) generates a M-states modulated signal, where $M=log_2(n_act)$, *n_act* being the number of active lines.

The clock of the counter is at the frequency of the maximum data rate achievable for that RF channel and the modulation format. As stated above, all the channels to be multiplexed (real and virtual) are present at the MUX input. For the sake of simplicity, they may be considered synchronous.

The LUT structure is as follow:

- The memory address is the position of a particular channel in the superframe
- The content of the LUT at that address is the number of the channel wanted at that particular frame position

The output of the LUT feeds a "standard" multiplexer (which is essentially a parallel to serial converter).

Demultiplexer structure

As shown in fig. 4, an M-states modulated signal is received from the demodulator, which has at its output n lines that feed the parallel-to-serial converter. As in the transmit section, the LUT selects the channel to be demultiplexed from within the serial stream and sends it to the proper physical line. The LUT is the same as in the transmit section unless a cross connection is to be implemented. In that case, the content of a frame slot can be sent to a different physical channel. At the DEMUX output each line will have a corresponding enable line.

Algorithm for generating the LUT

The following parameters must be known for generating the LUT:

1. Modulation scheme
2. Maximum Baud rate *B* of the modulator for the given modulation scheme
3. Number $N_F$ of active physical channels at the MUX input, typology and rate.
4. Number $N_V$ of active virtual channels, their definition and rate
5. PRTY to be assigned to each physical channel
6. the *(m,k)* ratio of the FEC (if present)
7. Frame rate *F*

The algorithm steps will be:

1. From the modulation scheme, the program calculates *N* and $q_k$
2. From the baud rate, the modulation scheme, and the PRTYs, the program verifies that the maximum PRTY is always guaranteed for all the channels for which has been defined. In case this is not possible, it is requested to assign different PRTY. The program also considers also the FEC redundancy and the channel for which, by definition, the PRTY is equal to $q_{min}$.
3. From *m*, *F* the program computes the optimal number of bytes for the minimal subframe and checks if this number is compatible with the baud rate.
4. The program defines the subframes and the superframe structures.
5. The program then generates the complete LUT.

Without any loss of generality, *m, k, B* may be assumed to be in units of Bytes and Bytes/s.

**Definition and algorithm for filling the minimal subframe**

1. Compute $B \cdot q_{min}$
This product is the maximum number of Bytes/s of the minimal subframe

1. If FEC is present, compute *L,* an integer multiple *of m,* such that $L \leq \frac{B \cdot q_{min}}{F}$

If FEC is not present, $L = round(\frac{B \cdot q_{min}}{F})$

*L* is the number of bytes in the minimal subframe.

2. The actual baud rate $B_{eff}$ will be: $B_{eff} = \frac{L \cdot F}{q_{min}}$

3. It must be verified that the sum of the rate of all the channels (virtual + physical) with PRTY=$q_{min}$ is lower or equal $B_{eff} \cdot q_{min}$. If this condition is not satisfied go back to step 2 and change the value of *F*. If this is not possible, or if it is impossible to allocate all the channels with PRTY=qmin in the minimal subframe, the PRTY of some channel must be lowered and its *q* value increased.

4. The time base of the minimal subframe is then defined. In general the best strategy is to interleave as many channels as possible, in order to reduce jitter problems and to decrease the length of the elastic memories, as well as to make the error rates of the channels more uniform (in the event of burst errors).

**Definition and algorithm for filling the remaining subframes**

Once $B_{eff}$ and *L,* have been determined, the length $L_{qk}$ of the subframes with PRTY=$q_k$ is uniquely determined and is equal to:

$$L_{qk} = \frac{B_{eff} \cdot (q_k - q_{k-1})}{F}$$

For filling these frames the same technique as for the minimal sub-frame is used. As stated above, if this is not possible, new values of $q_k$ for some channels will have to be entered.

**Superframe definition**

Once all the subframes have been defined, the superframe is obtained by interleaving them. The sub-frames occupy cyclically, with periodicity $q_{max}$, a slot *J* (bit or byte) of the superframe, where $(1+q_{k-1}) \leq J \leq q_k$

**LUT definition**

At this point the Frame Wizard will generate the LUT. For sake of simplicity, we will treat the superframe as a vector SP of length

$$L_{sp} = \sum_{k=1}^{N} \frac{B_{eff} \cdot (q_k - q_{k-1})}{F}$$

Its content will be indicated by:

$$SP(j) \; 1 \leq j \leq L_{SP}$$

In order to generate the LUT, the Frame Wizard must know *a priori* the number associated with each channel at the MUX input. In general this number will be the position of that channel at the MUX input. If C is the total number of channels (physical and virtual) at the MUX input, the LUT will have the following format (matrix 2x$L_{sp}$)

$$[j, C(j)] \qquad 1 \leq j \leq L_{SP} \tag{1}$$

where *C(j)* is the number of the channel to be placed at position j of the super-frame.

**Flow chart of the algorithm**

Fig. 5 shows the flow chart of the above algorithm.

**Example:**

Let's make the following example:

Input parameters to the Frame Wizard:

1. Adaptive modulation scheme 4/16/64QAM
2. Maximum Baud rate $B$ = 2.5Mbaud/s.
3. Physical channels: 6 E1 channels (2048kbit/s each)
4. Virtual channels:

— 6 stuffing channels (one for each E1 line, 1 byte per frame for each stuffing channel)
— 1 alignment word (1 byte per frame)
— 1 link_identifier (1 byte per frame)
— 1 peer service channel (2 bytes per frame)
— 1 telemetry channel (2 bytes per frame)
— 1 TMN channel (2 bytes per frame)
— 1 FEC channel (10 bytes per frame)

5. PRTYs: $q_1$=2; $q_2$=4; $q_3$=6.
We assign $q_1$ to the first two E1 channels, $q_2$ to the third and fourth E1 channel, $q_3$ to the last two E1 channels. To all the virtual channels a PRTY $q_1$ has been assigned.
6. FEC : Reed-Solomon (152,142) => $m$=152, $k$=142;
7. Frame rate $F$: 4kHz.

Minimal subframe (PRTY = $q_1$)

1. $Bq_1$= 5Mbit/s = 625kbytes/s
2. $(Bq_1)/F$ = 156.25; Since the FEC is present => L=152;
3. $B_{eff} = (L F)/ q_1$ = (152x4)/2 = 304kbyte/s
4. $B_{eff}\, q_1$=608kbytes/s (rate of the minimal subframe)
5. Sum of all the rates of the channels with PRTY $q_1$ =592kbyte/s. It lower than the minimal subframe rate, thus this subframe can carry all the channels with PRTY= $q_1$
6. Filling of the minimal subframe:

- Byte 1: Alignment word
- Byte 2: link_identifier
- Bytes 3,4: Telemetry
- Bytes 5,6: Peer channel
- Bytes 7,8 : TMN
- Alternatively 64 bytes of the channels 1E1 and 2E1 until byte 136;
- Bytes 137,139: "empty" channel
- Byte 140: Stuffing 1E1
- Byte 141: Stuffing 2E1
- Bytes 142-152: FEC syndrome

**Subframe with PRTY = $q_2$**

- Alternatively 64 bytes of the channels 3E1 and 4E1 until byte 128
- Bytes 129-139: "empty" channel
- Byte 140: Stuffing 3E1
- Byte 141: Stuffing 4E1
- Bytes 142-152: FEC syndrome

**Subframe with PRTY = $q_3$**

- Alternatively 64 bytes of the channels 3E1 and 4E1 until byte 128
- Bytes 129-139: "empty" channel
- Byte 140: Stuffing 3E1
- Byte 141: Stuffing 4E1
- Bytes 142-152: FEC syndrome

**Superframe:**

- Periodicity = 6;
- Bytes 1 and 2 are occupied by the minimal subframe
- Bytes 3 and 4 are occupied by the subframe with PRTY = $q_2$
- Bytes 5 and 6 are occupied by the subframe with PRTY = $q_3$
- so on until byte 456

**Temporary LUTs:**

The input channels to the MUX are numbered like shown in fig. 6. The temporary LUT for the different subframes will have the structure shown in fig. 7.

Superframe LUT:

The superframe LUT is obtained by interleaving the temporary LUTs of the subframes as shown in fig. 8. While the invention was described as applied to a preferred embodiment, it will be understood that various omissions and substitutions and changes in the details of the system described may be made by those skilled in the art without departing from the spirit of the invention.

## Claims

1. System to radio-transmit N signals to be bundled together at the transmitter and to be unbundled at the reception in channel multiplexer/demultiplexers, **characterized in that** said multiplexers-demultiplexers have flexible and programmable structure and bring about point -point radio-transmissions utilizing adaptive modulation, with traffic prioritization wherein because of said adaptive modulation the transmission physical mode (PHY MODE) is varied at the time variations of the sole propagation conditions, at a parity of occupied bandwidth (BW), obtaining service quality levels differentiated for the various transmitted service signals and wherein service signals of different nature are bundled and different service quality levels are realized.

2. System according to claim 1, wherein a signal traffic is aggregated in which at least a portion is of the data type (cell or packet), at least for the payload part submitted to the time variation of the transmission rhythm conseguent to the PHY mode change i.e. at least for the frame part that will not survive a PHY mode change.

3. System according to at least one of the above claims, wherein the service quality diversification assigned to more signals bundled for the point-to-point adaptively modulated radio transmission is utilized to obtain, at a parity of length, the drastic reduction of the system gain requested to the radio transmission to guarantee the predetermined quality, i.e. the traffic is prioritized with the aim of greatly reducing the system gain of the radio transmission requested to guarantee the same wanted service availabilities.

4. System according to at least one of the previous Claims, wherein the said PHY modes are differentiated by at least one of the following conditions:

   - Different modulation formats with same FEC (Forward Error Correction) encoding/decoding used (or no FEC encoding/decoding at all)
   - Same modulation formats but different FEC encoding/decoding formats (including the case where no FEC encoding is used for a particular PHY mode)
   - Different modulation formats and different FEC encoding/decoding formats (including the case where no FEC encoding is used for a particular PHY mode)

5. System according to Claim 6, wherein the said PHY modes, maintaining the same RF occupied BW (Band Width), have different values of the two following characteristic parameters:

- η (bit/Hz), the net spectral efficiency, (the higher the spectral efficiency, the higher is the modulation format and/or the lower the FEC redundancy)
- α (dB) Receive Signal to Noise Ratio (SNR), necessary to obtain a fixed error probability (BER) at the output of the FEC decoder, which increases with increasing η, i.e. with the modulation format

**6.** System according to at least one of the previous Claims, **characterized by** an architecture in which (via a user interface) different priorities or service grades, are congruently assigned to different PHY modes available from the adaptive modulation scheme.

**7.** System according to Claim 8, wherein

- services with the major priority (priority 1) are assigned to the minor complexity PHY mode, (the one α1 with the lower S/N threshold), which will better resist to the propagation severity and guarantee thereby the maximum time availability,
- services with a priority 1 and 2 are assigned to the PHY mode immediately successive in complexity order, i.e. with S/N threshold α 2 > α 1 and soon ordinately.

**8.** System according to at least one of the previous claims, wherein the services are assigned in order of decreasing priority, to PHY modes of lower complexity the architecture allowing different configuration options for the assigned BW, in particular 3,5-7-14 and 28 MHz.

**9.** System according to at least one of the previous claims, **characterized by** configurations to accept mixed services of various nature and formats in variable proportions such as PDH signal in format N x E1, ATM signals in format N x E1 - IMA and signals in Ethernet 10/100 BT format.

**10.** System according to at least one of the previous Claims, wherein the multiplexing time base of the frame is flexible and programmable (via said lookup-up table, LUT) and generated from a user interface that allows the user to:

- Define different priorities to be assigned to the different channels
- Manage the number, type, rate of the service channels to be transmitted (within the hardware limits)
- Reduce the FEC encoding and use that overhead for transmitting more data instead.
- Optimize, within the hardware limits, the frame time based on user request

**11.** System according of Claims 12, where for the LUT writing, the minum sub-frame is firstly filled up and then the remaining sub-frames are filled up as per paragraphs 5.7 and 5.8 which are thereafter bundled to create the superframe as expressed in the relaltion (1) of the specification.

**12.** System according to claim 13, wherein the provisional LUT of the sub-frames have the structure shown in fig. 7, the LUT of the superframe has a structure of the type shown in fig. 8 for a numeration of the channels entering MUX of the type of fig. 6.

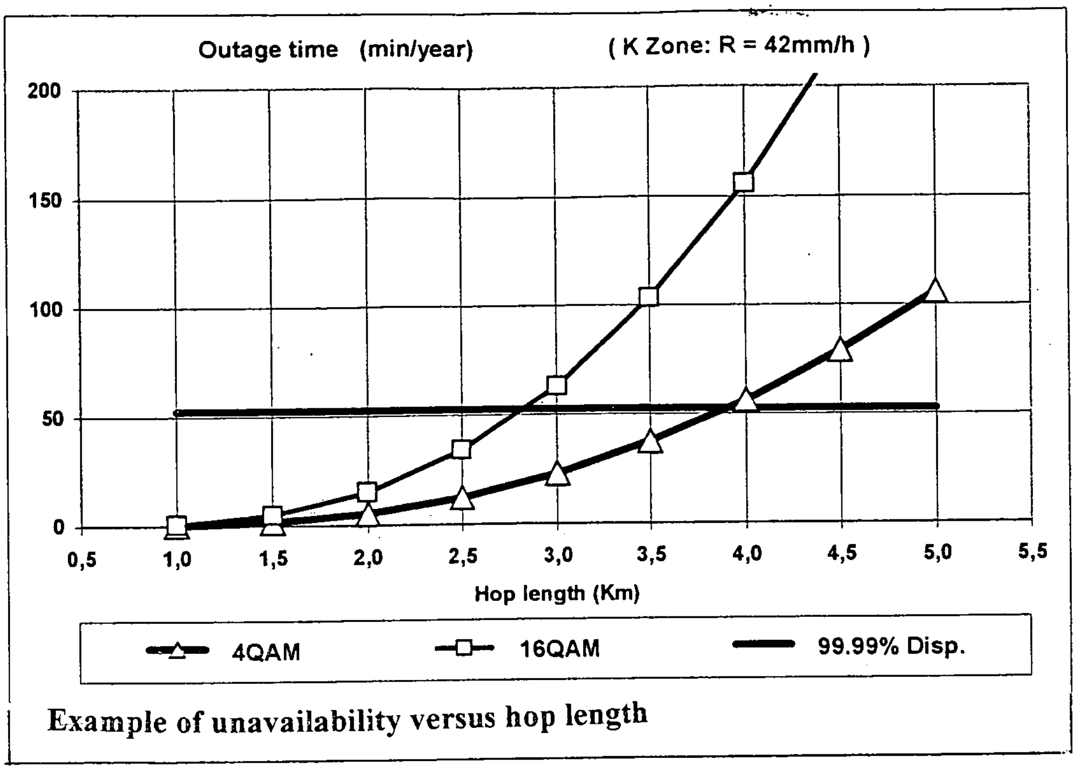


Example of unavailability versus hop length

Fig. 1

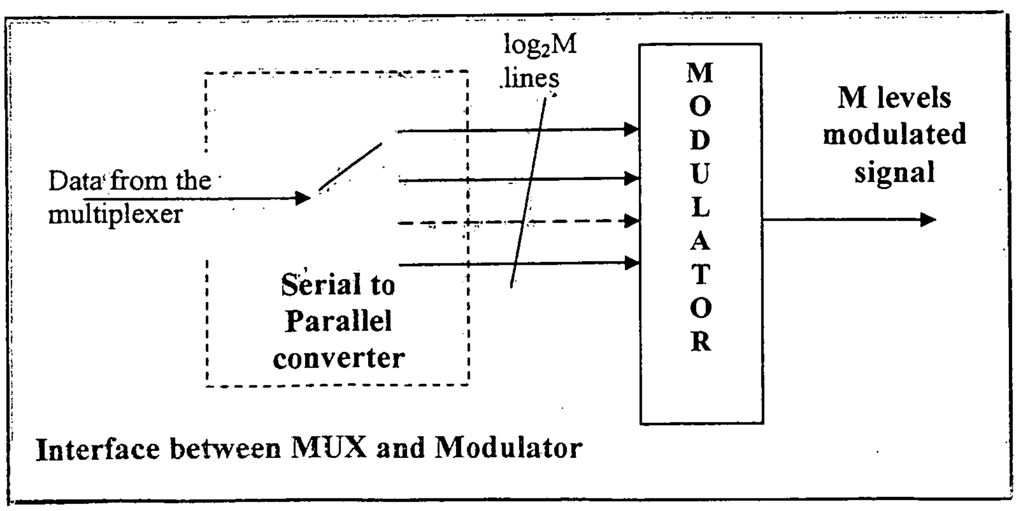


Interface between MUX and Modulator

Fig. 2

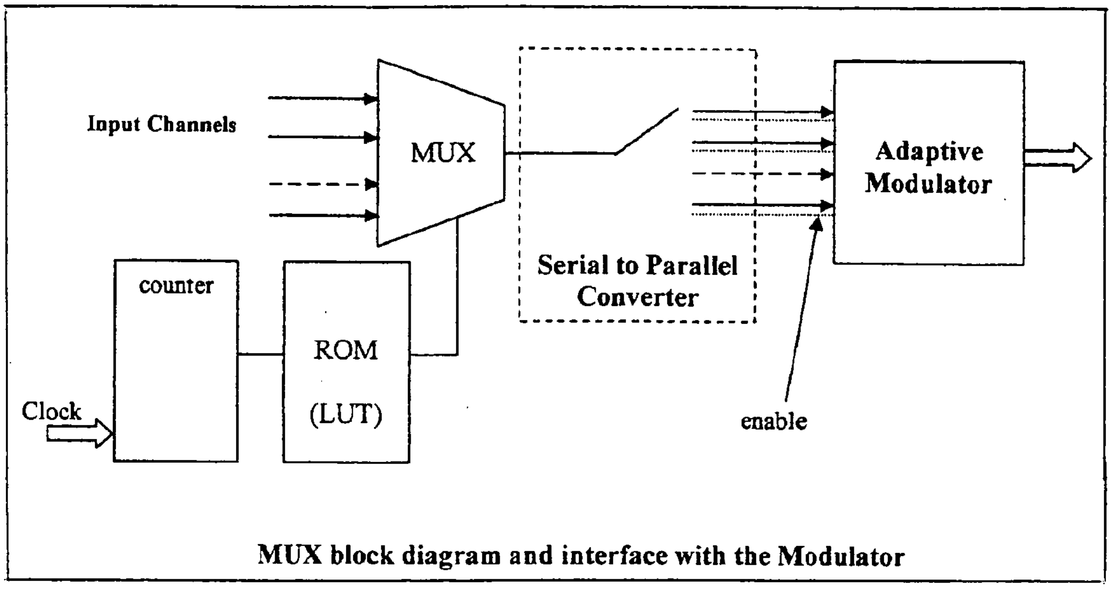
Input Channels
MUX
Serial to Parallel Converter
Adaptive Modulator
counter
ROM (LUT)
Clock
enable
MUX block diagram and interface with the Modulator

Fig. 3

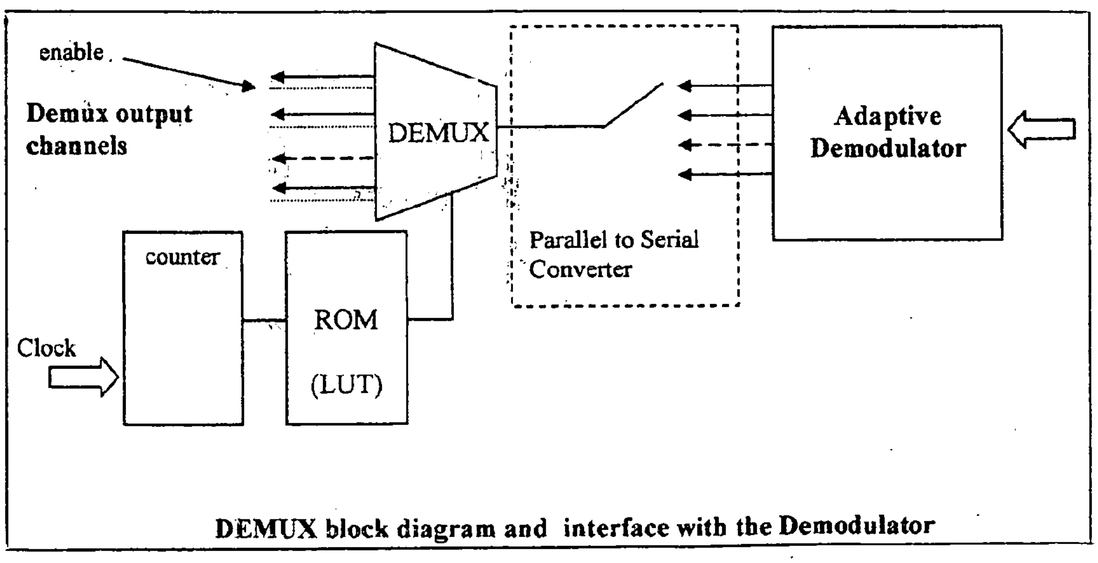
enable
Demux output channels
DEMUX
Parallel to Serial Converter
Adaptive Demodulator
counter
ROM (LUT)
Clock
DEMUX block diagram and interface with the Demodulator

Fig. 4

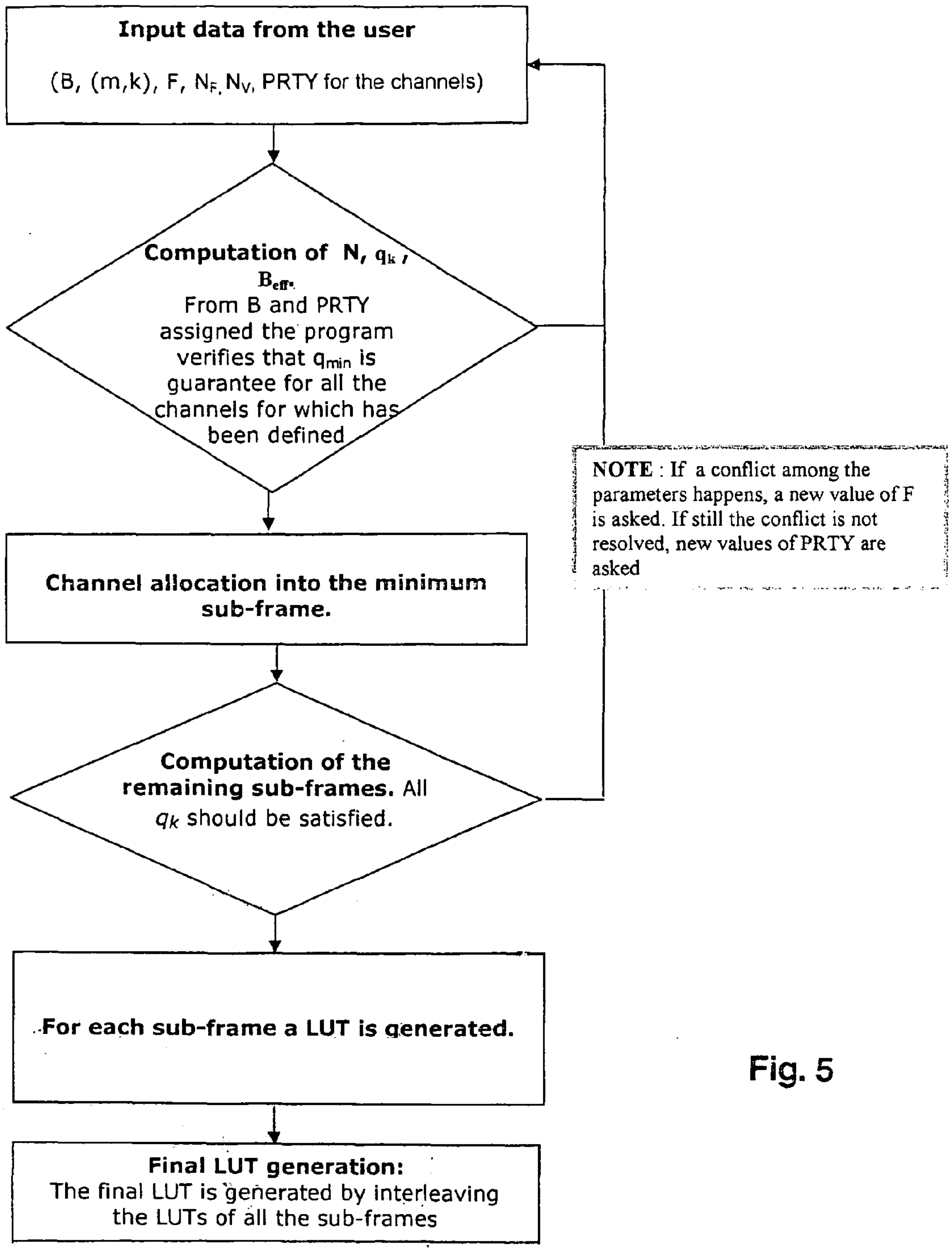


Fig. 5

Flow chart showing generation of the lookup table (LUT)

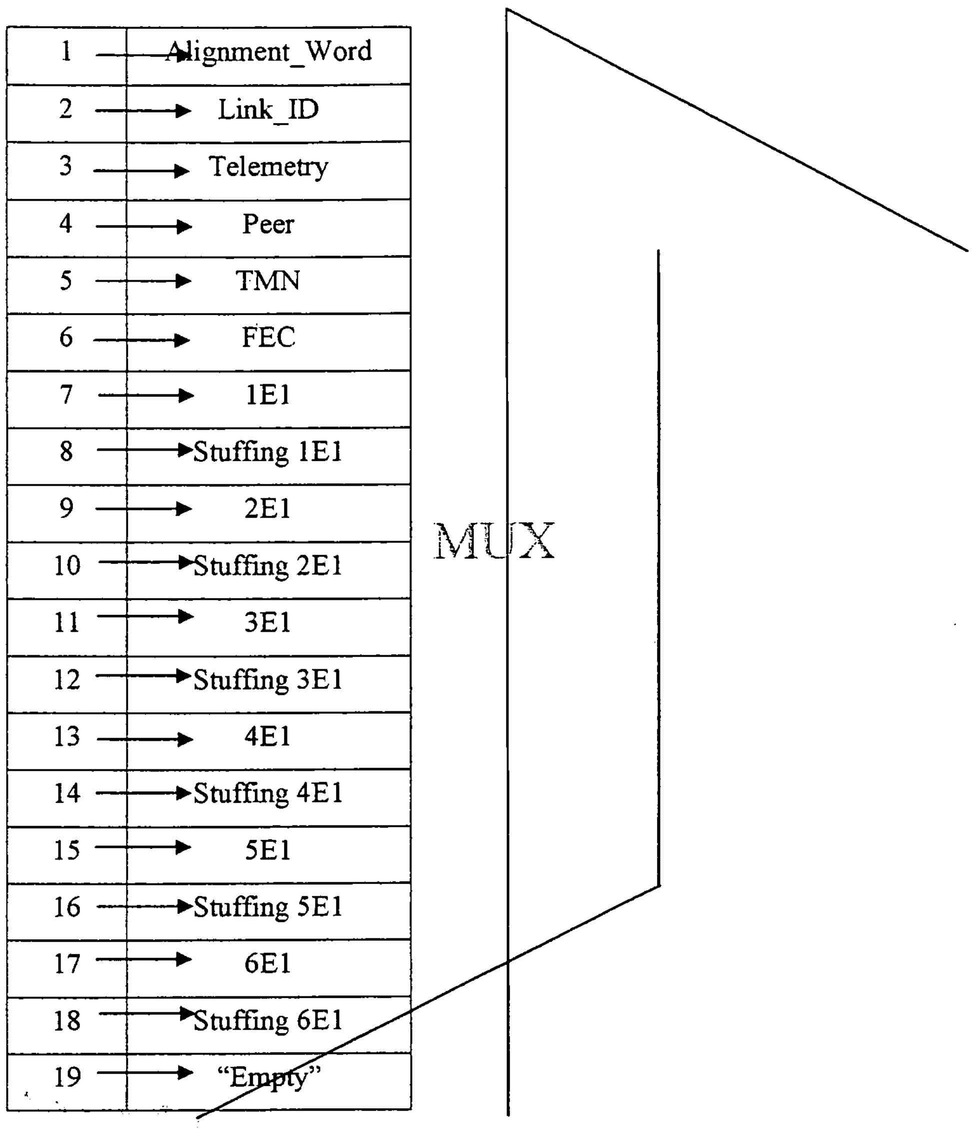


Fig. 6

**Input Channels to the MUX**

| | q=2 | q=4 | q=6 |
|---|---|---|---|
| 1 | 1 | 11 | 15 |
| 2 | 2 | 13 | 17 |
| 3 | 3 | 11 | 15 |
| 4 | 3 | 13 | 17 |
| 5 | 4 | 11 | 15 |
| 6 | 4 | 13 | 17 |
| 7 | 5 | 11 | 15 |
| 8 | 5 | 13 | 17 |
| 9 | 7 | ... | ... |
| 10 | 9 | 19 | 19 |
| 11 | 7 | 19 | 19 |
| 12 | 9 | 19 | 19 |
| ... | ... | ... | ... |
| 138 | 7 | 19 | 19 |
| 139 | 9 | 19 | 19 |
| 140 | 8 | 12 | 16 |
| 141 | 10 | 14 | 18 |
| 142 | 6 | 6 | 6 |
| 143 | 6 | 6 | 6 |
| ... | ... | ... | ... |
| 152 | 6 | 6 | 6 |

Temporary LUTs

Fig. 7

| | |
|---|---|
| 1 | 1 |
| 2 | 2 |
| 3 | 11 |
| 4 | 13 |
| 5 | 15 |
| 6 | 17 |
| 7 | 3 |
| 8 | 3 |
| 9 | 11 |
| 10 | 13 |
| 11 | 15 |
| 12 | 17 |
| 13 | 4 |
| 14 | 4 |
| 15 | 11 |
| 16 | 13 |
| 17 | 15 |
| 18 | 17 |
| ... | ... |
| ... | ... |
| ... | |
| ... | ... |
| ... | ... |
| ... | ... |
| 420 | 8 |
| 421 | 10 |
| 422 | 12 |
| 423 | 14 |
| 424 | 16 |
| 425 | 18 |
| 426 | 6 |
| 427 | 6 |
| 428 | 6 |
| 429 | 6 |
| 430 | 6 |
| 431 | 6 |
| ... | ... |
| ... | ... |
| ... | |
| ... | ... |
| ... | ... |
| 456 | 6 |

Final LUT
(superframe LUT)

Fig. 8

European Patent Office

# EUROPEAN SEARCH REPORT

Application Number
EP 05 00 3646

| Category | Citation of document with indication, where appropriate, of relevant passages | Relevant to claim | CLASSIFICATION OF THE APPLICATION (Int.Cl.7) |
|---|---|---|---|
| X | WO 03/034639 A (NOKIA CORPORATION; MAEKINEN, JARMO; LEIKAS, AIMO; LOUHI, JYRKI; PEHKON) 24 April 2003 (2003-04-24)<br>* abstract; figures 1,2 *<br>* page 4, paragraph 3 - page 6, paragraph 1 *<br>* page 11, paragraph 3 - paragraph 4 *<br>* page 12, paragraph 2 - page 13, paragraph 1 *<br>----- | 1-12 | H04L1/00<br>H04J3/16<br>H04Q7/38 |
| X | PATENT ABSTRACTS OF JAPAN<br>vol. 2000, no. 12,<br>3 January 2001 (2001-01-03)<br>-& JP 2000 261398 A (KOKUSAI ELECTRIC CO LTD), 22 September 2000 (2000-09-22)<br>* abstract *<br>----- | 1-12 | |
| P,X | EP 1 406 405 A (ALCATEL)<br>7 April 2004 (2004-04-07)<br>* abstract; figures 1,2 *<br>* paragraph [0001] *<br>* paragraph [0008] *<br>* paragraph [0026] - paragraph [0033] *<br>* paragraph [0037] *<br>* paragraph [0039] - paragraph [0041] *<br>----- | 1,6-9 | TECHNICAL FIELDS SEARCHED (Int.Cl.7)<br>H04L<br>H04J<br>H04Q |
| A | EP 1 303 067 A (ALCATEL)<br>16 April 2003 (2003-04-16)<br>* abstract *<br>-----<br>-/-- | 1 | |

The present search report has been drawn up for all claims

| Place of search | Date of completion of the search | Examiner |
|---|---|---|
| The Hague | 24 May 2005 | Pieper, T |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

# EUROPEAN SEARCH REPORT

Application Number
EP 05 00 3646

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JUNG MIN PARK ET AL: "Efficient resource allocation for QoS channels in MF-TDMA satellite systems" PROCEEDINGS OF IEEE MILITARY COMMUNICATIONS CONFERENCE, MILCOM 2000, vol. 2, 22 October 2000 (2000-10-22), pages 645-649, XP010531983 LOS ANGELES, US * page 646, left-hand column, last paragraph - right-hand column, paragraph 3 * * page 647 - page 648, paragraph "4. RESOURCE ALLOCATION" ----- | 1-12 | |
| | | | TECHNICAL FIELDS SEARCHED (Int.Cl.7) |

The present search report has been drawn up for all claims

1

| Place of search | Date of completion of the search | Examiner |
|---|---|---|
| The Hague | 24 May 2005 | Pieper, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 05 00 3646

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2005

| Patent document cited in search report | | Publication date | Patent family member(s) | | Publication date |
|---|---|---|---|---|---|
| WO 03034639 | A | 24-04-2003 | WO | 03034639 A1 | 24-04-2003 |
| | | | EP | 1435146 A1 | 07-07-2004 |
| | | | US | 2005075078 A1 | 07-04-2005 |
| JP 2000261398 | A | 22-09-2000 | NONE | | |
| EP 1406405 | A | 07-04-2004 | EP | 1406405 A1 | 07-04-2004 |
| EP 1303067 | A | 16-04-2003 | EP | 1303067 A1 | 16-04-2003 |
| | | | AT | 266913 T | 15-05-2004 |
| | | | DE | 60103280 D1 | 17-06-2004 |
| | | | DE | 60103280 T2 | 19-05-2005 |
| | | | US | 2003072323 A1 | 17-04-2003 |

EPO FORM P0459

For more details about this annex : see Official Journal of the European Patent Office, No. 12/82